# EUROPÄISCHE PATENTANMELDUNG

(11) **EP 1 249 470 A2**
(43) Veröffentlichungstag der Anmeldung: **16.10.2002**
(21) Anmeldenummer: 02005164.5
(22) Anmeldetag: 08.03.2002
(51) Int. Cl.: C08K 9/06

(54) **Hochgefüllte pastöse siliciumorganische Nano- und/oder Mikrohybridkapseln enthaltende Zusammensetzung für kratz- und/oder abriebfeste Beschichtungen**

(30) Priorität: 30.03.2001 DE 10116207; 25.08.2001 DE 10141688; 21.02.2002 DE 10207401
(71) Anmelder: Degussa AG, 40474 Düsseldorf (DE)
(72) Erfinder: Edelmann, Roland, 79664 Wehr (DE); Monkiewicz, Jaroslaw, Dr., 79618 Rheinfelden (DE); Borup, Björn, Dr., 79618 Rheinfelden (DE); Mehnert, Reiner, Prof. Dr., 04416 Markkleeberg (DE); Gläsel, Hans-Jürgen, Dr., 04229 Leipzig (DE); Langguth, Helmut, Dr., 04103 Leipzig (DE)

(57) **Zusammenfassung**

Die vorliegende Erfindung betrifft eine besonders homogene, hochgefüllte pastöse siliciumorganische Nano- und/oder Mikrohybridkapseln enthaltende Zusammensetzung für kratz- und/oder abriebfeste Beschichtungen.

Ferner betrifft die vorliegende Erfindung ein Verfahren zur Herstellung einer siliciumorganische Nano- und/oder Mikrohybridkapseln enthaltenden pastösen Zusammensetzung.

Ebenfalls lehrt die vorliegende Erfindung die Verwendung solcher Zusammensetzungen für die Herstellung von Lack zur Erzeugung einer kratz- und abriebfesten Beschichtung auf einem Substrat.

## Beschreibung

Die vorliegende Erfindung betrifft eine siliciumorganische Nano- und/oder Mikrohybridkapseln enthaltende Zusammensetzung für kratz- bzw. abriebfeste Beschichtungen, wobei das siliciumorganische Nano- bzw. Mikrohybridsystem aus kleinen metalloxidischen Kernen A und einer im Wesentlichen vollständigen, siliciumorganischen Umhüllung B besteht und die Zusammensetzung. durch eine in situ durchgeführte Umsetzung von metalloxidischen Partikeln (KA-O) und mindestens einer organofunktionellen Siliciumverbindung, die eine organofunktionelle Gruppe und mindestens eine hydrolysierbare Gruppe bzw. mindestens eine Hydroxygruppe aufweist, in einem Kunstharz oder in einer Kunstharzvorläuferverbindung erhältlich ist. Weiterhin betrifft die vorliegende Erfindung die Verwendung solcher Zusammensetzungen als Basis für Lacke zur Erzeugung einer kratzfesten und abriebfesten Beschichtung auf einem Substrat sowie entsprechend kratz- sowie abriebfest beschichtete Artikel.

Es ist bekannt, die Oberflächeneigenschaften von Sol- oder Gelpartikeln oder von Metall- bzw. Halbmetalloxiden durch eine Behandlung mit einem hydrolysierbaren Organosilan oder Organosiloxan zu modifizieren, wobei in der Regel eine nur einlagige Silanschicht an das Oxid- bzw. Solgelpartikel anbindet. So behandelte Oxide bzw. Sol- oder Gelpartikel, beispielsweise anorganische Pigmente oder Füllstoffe, können in eine Polymermatrix eingebracht werden, insbesondere in Folien sowie in Beschichtungsmittel und damit erzeugbare Beschichtungen. In der Regel.ist jedoch die Kratz- bzw. Abriebfestigkeit solcher Polymersysteme gering.

DE 198 46 660 offenbart nanoskalige, oberflächenmodifizierte Oxid- bzw. Mischoxidpartikel, die von kovalent an das Oxidpartikel gebundenen siliciumorganischen Gruppen umhüllt sind, wobei die organofunktionellen Gruppen als reaktive Gruppen beschrieben werden und üblicherweise nach außen orientiert sind, sodass sie durch Polymerisation mit dem Polymermaterial beim Aushärten des Präpolymers in die Polymermatrix eingebunden werden. Das Herstellungsverfahren solcher Beschichtungsmittel ist aufwendig, da das Organosilan und die oxidische Komponente alternierend in das Präpolymer eingearbeitet werden.

DE 198 46 659 besitzt den selben Zeitrang wie DE 198 46 660 und betrifft einen Schichtwerkstoff, der mit einer kratzfesten Kunstharzschicht versehen ist, welche ebenfalls nanoskalige, oberflächenmodifizierte Oxidpartikel enthält. DE 198 46 659 lehrt speziell den Einsatz von Acryloxyalkylsilanen zur Erzeugung einer Umhüllung nanoskaliger Oxidpartikel, welche reaktive, strahlenvernetzbare Gruppen besitzt. Die Herstellung des Beschichtungsmittels erfolgt hier ebenfalls durch eine zeitaufwendige Umsetzung einer nanoskaligen Kieselsäure mit 3-Methacryloxypropyltrimethoxysilan (DYNASYLAN® MEMO) in einer Acrylatformulierung in Gegenwart von Wasser, einer Säure sowie eines Netzmittels. Wiederum müssen die Komponenten in einer speziellen Reihenfolge alternierend zusammengebracht werden.

Darüber hinaus sind hydrolysierbare Silankomponenten mit ethylenisch ungesättigten Organogruppen meist hochpreisige Einsatzstoffe. Ferner neigt DYNASYLAN® MEMO bereits in Gegenwart geringer Spuren einer die Polymerisation in Gang setzenden Substanz oder Strahlung zur Reaktion, wodurch die Viskosität einer entsprechenden Zubereitung drastisch ansteigen kann. Zur Vermeidung der unerwünschten Polymerisation müssen Stabilisatoren zugesetzt werden. Daher ist es oft schwierig, die Handhabung der Einsatzstoffe und die Herstellung solcher Beschichtungssysteme zu beherrschen.

Weiterhin sind besagte Beschichtungsmittel vielfach hochviskos und enthalten meist nur einen geringen Anteil an Oxidpartikeln, was sich auf die Kratzfestigkeit der späteren Beschichtung auswirkt. Auch ist es schwierig, solche hochviskosen Beschichtungsmittel auf ein Substrat aufzutragen, insbesondere wenn es sich um dünne, zerreißbare Substrate handelt. Oft ist die Kratzfestigkeit so erhältlicher Beschichtungen verbesserungswürdig. Bei solchen hochviskosen Systemen ist darüber hinaus eine spezielle aufwendige Auftragevorrichtung erforderlich. Häufig werden solchen hochviskosen Beschichtungsmitteln auch Lösungsmittel zugegeben, die zur Erhöhung der organischen Emissionen (VOC-Problematik, VOC = "flüchtige organische Verbindungen") führen.

An einem handelsüblichen abriebbeständigen PU-Lack wurden 2 mg Abrieb nach 50 Umdrehungen gemessen (Taber-Abraser-Test nach DIN 68 861).

Gemäß der Lehre der noch nicht veröffentlichen deutschen Patentanmeldungen 101 00 631 und 101 00 633 können im Wesentlichen kratzfeste (DIN 53 799) Beschichtungen erzeugt werden. Leider können solche Beschichtungssysteme für Anwendungen bei denen nicht nur Kratzfestigkeit sondern auch eine hinreichende Abriebbeständigkeit (Haze nach DIN 52 347 / ASTM D-1044 und Abrieb nach DIN 68 861) erforderlich ist nicht eingesetzt werden, beispielsweise für Holzlackierungen, Kunststoff- und Parkettfußböden. Darüber hinaus können höher gefüllte Systeme Inhomogenitäten aufweisen, was sich auf die Oberflächenqualität der späteren Beschichtung nachteilig auswirkt. Ferner sei an dieser Stelle auf die deutsche Patentanmeldung 101 41 690 mit dem Titel "Siliciumorganische Nano/Mikrohybridsysteme enthaltende Zusammensetzung für kratz- und abriebfeste Beschichtungen" hingewiesen.

Da die Anwender oftmals solche siliciumorganische Nano- bzw. Mikrohybridsysteme enthaltende Zusammensetzungen zur Herstellung oder Modifizierung ihrer Lackformulierungen für eine kratz- bzw. abriebfeste Ausrüstung verwenden möchten, bestand die Aufgabe, ein System bereitzustellen, das möglichst homogen und insbesondere hinsichtlich des Feststoffgehalts möglichst variabel einsetzbar ist, wobei man entsprechende Lackformulierungen zur Erzeugung kratz- und/oder abriebfester Beschichtungen verwenden kann.

Die Aufgabe wird erfindungsgemäß entsprechend den Angaben der Patentansprüche gelöst.

Gefunden wurde, dass durch Führen der so genannten in-situ-Reaktion, wie sie insbesondere aus DE 101 00 631, DE 101 00 633 und der DE 101 41 690 zu entnehmen ist, auf einem Dreiwalzenstuhl, in einem Konusmischer, in einem Kneter oder in einem Dispergator mit guter Dispergierwirkung, - wie er beispielsweise unter dem Namen Torusmill® von der Firma VMA-Getzmann GmbH angeboten wird (EP 0 850 106 B1), wobei man bei der vorliegenden Erfindung im Falle des Einsatzes der Torusmill® ausschließlich den Dissolver bzw. die Dissolverscheibe einsetzt und nutzt, d. h. dass man hier auf den Einsatz der Tauchmühle der Torusmill® verzichtet und die Tauchmühlenfunktion bei vorliegendem Herstellverfahren nicht verwendet -, lager- und weitgehend alterungsbeständige Pasten, d. h. hochgefüllte, in hervorragender Weise homogene siliciumorganische Nano- und/oder Mikrohybridkapseln enthaltende Zusammensetzungen durch Einarbeitung mindestens einer siliciumorganischen Verbindung und mikroskaligen Korunds und/oder nanoskaligen Oxids in ein Kunstharz oder eine Kunstharzvorläuferverbindung erhältlich sind.

Durch Verdünnen eines solchen Konzentrats bzw. einer solchen Paste mit einem Präpolymer, beispielsweise einem Acrylat, vorzugsweise 1 Gew.-Teil Paste mit 1 bis 5 Gew.-Teilen, besonders bevorzugt 1 bis 3 Gew.-Teilen, insbesondere 1,5 Gew.-Teilen Acrylat, kann man Lacksysteme erhalten, die nach Strahlenhärtung ausgezeichnete kratz- und abriebfeste Beschichtungen ergeben.

Auch kann man vorliegende Pasten in bestehende Lacksysteme auf Kunstharzbasis in einfacher Weise einarbeiten und vorteilhaft zur Erzeugung kratz- und abriebfester Beschichtungen verwenden.

Weiterhin kann man vorliegende Pasten in besonders einfacher und wirtschaftlicher Weise mit z. B. Acrylatverdünner, wie DPGDA oder HDDA, und gegebenenfalls weiteren, an sich bekannten Lackadditiven versetzen und zu einem anwendungsfertigen peroxidisch oder strahlenvernetzbaren kratz- und/oder abriebfesten Lack in gewünschter Weise verdünnen.

Geeigneterweise legt man dazu das Verdünnungsmittel oder einen Lack vor und rührt in einfacher und wirtschaftlicher Weise die erfindungsgemäße Paste ein. Die vorliegenden Pasten zeichnen sich somit durch eine überraschend vorteilhafte Verarbeitbarkeit sowohl bei der Herstellung der Pasten als auch bei Applikation nach Verdünnung aus.

Darüber hinaus zeigt die Praxis, dass selbst bei einem hohen Korundanteil in der Zusammensetzung keine überdurchschnittliche Abnutzung an den Misch- und Auftragsvorrichtungen festzustellen ist, was auch auf die siliciumorganische Umhüllung der Oxidpartikel zurückgeführt werden kann.

Ebenfalls wurde gefunden, dass erfindungsgemäße Pasten nach dem Verdünnen mit einem geeigneten Verdünnungsmittel bzw. durch Einarbeitung in organische Lacksysteme durch den Anwender in vorteilhafter Weise zur Erzeugung besonders kratz- und abriebfester Beschichtungen auf Substraten sowie entsprechende Artikel daraus verwendet werden können.

Unter einem härtbaren Kunstharz oder einer Vorläuferstufe eines härtbaren Kunstharzes, d. h. ein flüssiges Präpolymer oder ein Gemisch entsprechender Präpolymere, werden hier und nachfolgend zum Beispiel Acrylate, Methacrylate, Epoxid, Polyurethan, ungesättigte Polyester oder Mischungen daraus verstanden.

Ferner erhält man nach der vorliegenden Verfahrensweise im Wesentlichen vollständig und mehrschichtig siliciumorganisch umhüllte Oxidpartikel, d. h. Kerne A, die direkt in vorteilhafter Weise fein dispergiert in einem härtbaren Kunstharz oder einer Vorläuferstufe eines härtbaren Kunstharzes anfallen.

Darüber hinaus erhält man nach der vorliegenden Verfahrensweise das siliciumorganische Nano- bzw. Mikrohybridsystem in das Präpolymer besonders homogen eingearbeitet.

So erhaltene Zusammensetzungen zeichnen sich durch eine überraschend vorteilhafte Verarbeitbarkeit bei Herstellung und Applikation aus, da die Praxis zeigt, dass trotz Korundanteil in der Zusammensetzung durch die siliciumorganische Umhüllung der Korundpartikel keine zusätzliche Abnutzung an den Misch- und Auftragsvorrichtungen festzustellen ist.

Ein dilatantes Verhalten von Lacken kann bei technischen Prozessen allgemein und speziell bei Beschichtungen mit den Speziallacken ein Problem darstellen. Im Allgemeinen strebt man bei solchen, dilatanten Beschichtungssystemen eine Viskosität bis 2.500 mPa s an. Vorzugsweise besitzen erfindungsgemäße lösemittelfreie Beschichtungsmittel eine Viskosität von > 500 bis 2 000 mPa s, besonders vorzugsweise von 800 bis 1 000 mPa s. Für einen Walzenauftrag sollte die Viskosität im Bereich 0,8 bis 1,2 Pa s liegen.

Es wurde auch gefunden, dass neben einer in der Regel anzuwendenden Verdünnung der Paste bzw. viskoser Lacke und einem Temperaturregime bei der Beschichtung (typisch ca. 60 °C) spezielle Lackzusätze die Viskosität der Dispersionen effektiv herabsetzen können. Mit Zusatz von z. B. 9 Ma-% einer Formulierung, wie z.B. DPGDA mit 30 Ma-% Aerosil OX 50 und 9 Ma-% DYNASYLAN VTMO, kann man das rheologische Verhalten einer hochdilatanten Dispersion bzw. eines Lacks weiter verbessern.

Lacksysteme mit DYNASYLAN® PTMO als Silankomponente können dilatantes Verhalten zeigen. Durch Verwendung von Mischungen DYNASYLAN® PTMO unter Zusatz von VTMO oder einem entsprechenden oligomeren propyl- und/oder vinylfunktionellen Alkoxysiloxan oder Mischungen daraus kann man ein besonders günstiges rheologisches Verhalten erreichen.

Somit bevorzugt man beim vorliegenden Verfahren beispielsweise ein Gemisch aus PTMO und VTMO oder propylfunktionelle Alkoxysiloxane oder vinylfunktionelle Alkoxysiloxane oder propyl-/vinylfunktionelle Alkoxysiloxane - um nur einige Beispiele zu nennen - oder Mischungen daraus als siliciumorganische Komponente.

Der Einsatz oligomerer Organoalkoxysilane, wie gezielt hergestellte Kondensate oder Cokondensate, beispielsweise ausgehend von mindestens einem n-Propyltrialkoxysilan, Perfluor-1,1,2,2-tetrahydroalkyltrialkoxysilan, Phenyltrialkoxysilan, 3-Methacryloxypropyltrialkoxysilan und/oder Vinyltrialkoxysilan, wobei jeweils entsprechende organofunktionelle Alkoxysiloxane anfallen, ist auch von besonderem Vorteil, da die besagten Siloxane gegenüber den monomeren Silanen praktisch nicht flüchtig sind und somit unter Verarbeitungsbedingungen nicht verdampfen und bevorzugt beim vorliegenden Verfahren keine Eduktverluste zu verzeichnen sind. Dabei sind als Alkoxy-Gruppen Ethoxy sowie Methoxy bevorzugt.

Die Härtung besagter Beschichtung erfolgt geeigneterweise photochemisch durch UV-Bestrahlung oder durch Bestrahlung mit Elektronenstrahlen. Üblicherweise führt man die Bestrahlung bei einer Temperatur von 10 bis 60 °C, vorteilhaft bei Umgebungstemperatur, durch.

So kann man erfindungsgemäß in einfacher und wirtschaftlicher Weise mit siliciumorganische Nano-/Mikrohybridkapseln enthaltenden Pasten Beschichtungsmittel herstellen, mit denen man ausgezeichnet kratz- und abriebfeste Beschichtungen erzeugen kann.

Gegenstand der vorliegenden Erfindung ist daher eine im Wesentlichen besonders homogene, hochgefüllte pastöse siliciumorganische Nano- und/oder Mikrohybridkapseln enthaltende Zusammensetzung (auch kurz Paste genannt) für kratz- und/oder abriebfeste Beschichtungen,
wobei eine siliciumorganische Nano- bzw. Mikrohybridkapsel aus einem oxidischen Kern A, der mindestens ein nanoskaliges oder mikroskaliges Oxidpartikel (KA-O) der Komponenten (a) und/oder (b) enthält, und einer siliciumorganischen Umhüllung B besteht und die siliciumorganische Umhüllung B mindestens einen siliciumorganischen Bestandteil der allgemeinen Formel Ia

(Si'O-)ₓSi-R (Ia),

worin R für eine organofunktionelle Gruppe, wie auch aus Formel II in Form von R¹ und R² hervorgeht, steht und x eine Zahl von 0 bis 20 ist, die noch freien Valenzen von Si durch SiO- und/oder -Z und die freien Valenzen von Si durch SiO-, -R und/oder -Z gesättigt sind, die Gruppen Z gleich oder verschieden sind und Hydroxy- oder Alkoxy-Reste darstellen, und jedes Si bzw. Si' der Umhüllung B maximal eine Gruppe R trägt,
enthält und/oder der siliciumorganische Bestandteil der Umhüllung B über eine oder mehrere kovalente Bindungen der allgemeinen Formel Ib

(KA-O)-[(Si'O-)ₓSi-R] (Ib),

worin R die oben genannte Bedeutung besitzt und x eine Zahl von 0 bis 20 ist, die noch freien Valenzen von Si durch (KA-O)-, SiO- und/oder -Z und die freien Valenzen von Si' durch (KA-O)-, SiO-, -R und/oder -Z gesättigt sind, die Gruppen Z gleich oder verschieden sind und Hydroxy- oder Alkoxy-Reste darstellen, und jedes Si bzw. Si' der Umhüllung B maximal eine Gruppe R trägt,
an den Kern A (KA-O) gebunden ist,
erhältlich durch eine Umsetzung von
(i) Oxidpartikeln aus der Reihe
   (a) mindestens einem nanoskaligen Oxid und/oder Mischoxid mindestens eines Metalls oder Halbmetalls der zweiten bis sechsten Hauptgruppe, der ersten bis achten Nebengruppe des Periodensystems der Elemente oder der Lanthanide oder
   (b) einem mikroskaligen Korund oder
   (c) einem Oxidpartikelgemisch aus (a) und (b), mit
(ii) mindestens einem organofunktionellen Silan der allgemeinen Formel II

   R¹ ₛR² ᵣSiY₍₄₋ₛ₋ᵣ₎ (II),

   worin die Gruppen R¹ und R² gleich oder verschieden sind und jeweils eine lineare, verzweigte oder cyclische Alkylgruppe mit 1 bis 50 C-Atomen, vorzugsweise mit 1 bis 16 C-Atomen, eine Alkenylgruppe mit 2 bis 6 C-Atomen, eine Chloralkyl-, Isocyanoalkyl-, Cyanoalkyl-, Fluoralkyl-, Aryl-, Acylalkyl-, Acryloxyalkyl-, Methacryloxyalkyl-, Polysulfanalkyl-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellen, Y eine Methoxy-, Ethoxy-, i-Propoxy-, n-Propoxy- oder 2-Methoxyethoxy-Gruppe darstellt und s gleich 1 oder 2 oder 3 und r gleich 0 oder 1 oder 2 sind, mit der Maßgabe (s+r) ≤ 3,
   und
(iii) gegebenenfalls einem monomeren und/oder oligomeren Kieselsäureester, der Methoxy-, Ethoxy-, n-Propoxy- oder i-Propoxygruppen trägt und einen mittleren Oligomerisierungsgrad von 1 bis 50 aufweist, beispielsweise Tetramethoxysilan, wie DYNASIL® M, Tetraethoxysilan, wie DYNASIL® A, Tetrapropoxysilan, wie DYNASIL® P, oder ein oligomeres Ethylsilikat, wie DYNASIL® 40,
   und
(iv) gegebenenfalls einem organofunktionellen Siloxan, dessen Funktionalitäten gleich oder verschieden sind und jedes Si-Atom im Siloxan eine Funktionalität aus der Reihe Alkyl, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy trägt und die verbleibenden freien Valenzen der Si-Atome im Siloxan durch Methoxy- oder Ethoxy- oder Hydroxy-Gruppen gesättigt sind, bevorzugt sind solche Siloxane mit einem mittleren Oligomerisierungsgrad von 1 bis 20, vorzugsweise mit einem mittleren Oligomerisierungsgrad von 2 bis 10, wie sie insbesondere aus den deutschen Patentanmeldungen 199 55 047, 199 61 972, 100 56 343, 101 51 264, 102 02 389, EP 0 518 057, EP 0 590 270, EP 0 716 127, EP 0 716 128, EP 0 760 372, EP 0 814 110, EP 0 832 911, EP 0 846 717, EP 0 846 716, EP 0 846 715, EP 0 953 591, EP 0 955 344, EP 0 960 921, EP 0 978 525, EP 0 930 342, EP 0 997 469, EP 1 031 593 und EP 0 075 697 zu entnehmen sind,
wobei die Umsetzung in situ in einem flüssigen, härtbaren Kunstharz oder einer Vorläuferstufe eines Kunstharzes erfolgt, der Gehalt an Oxidpartikel der Komponente (i) 10 bis 300 Gew.-Teile, bezogen auf 100 Gew.-Teile der eingesetzten Kunstharzkomponente, beträgt und man die Umsetzung in einem Knet-oder Dispergieraggregat mit entsprechender Dispergierwirkung durchgeführt.

Unter Knetaggregaten sind bei der vorliegenden Erfindung solche Verarbeitungseinheiten zu verstehen, die neben der üblichen Mischwirkung eine Knetwirkung und gegebenenfalls zusätzliche Dispergierwirkung, d. h. Wirkungen, die zur Homogenisierung der hochgefüllten Kunstharzmasse beitragen. Geeigneterweise kann man zur Herstellung der erfindungsgemäßen Paste einen Walzenstuhl, Konusmischer, Extruder mit Misch- und Knetfunktion, Kneter oder ein leistungsstarkes Dispergieraggregat verwenden.

Als Alkoxy-Reste der Gruppen Z sind solche mit einem lineare, cyclischen oder verzweigten Alkylrest mit 1 bis 18 C-Atomen bevorzugt, insbesondere sind Methoxy-, Ethoxy-, i- oder n-Propoxygruppen bevorzugt.

Bei erfindungsgemäßen siliciumorganischen Nano- bzw. Mikrohybridkapseln beträgt das Gewichtsverhältnis zwischen Kern A und Umhüllung B vorzugsweise 0,5 : 1 bis 100 : 1, besonders bevorzugt 1 : 1 bis 2 : 1. Besonders bevorzugt setzt man beim erfindungsgemäßen Verfahren ein Einsatzstoffverhältnis der oxidischen Komponente (i), der siliciumorganischen Komponenten (ii) bis (iv) und der Kunstharzkomponenten von 0,2 : 0,5 : 1 bis 3 : 1 : 1 Gew.-Teilen, insbesondere von 1 : 1 : 1 bis 2 : 1 : 1 Gew.-Teilen, ein. Dabei kann das Gewichtsverhältnis der siliciumorganischen Komponenten (ii), (iii) und (iv) untereinander von 1 : 0 : 0 über 1 : 1 : 0 und 1 : 0 : 1 und 0 : 1 : 1 bis 0 : 0 : 1 reichen.

Geeigneterweise besteht ein Kern A der erfindungsgemäßen siliciumorganischen Nano-/Mikrohybridkapseln aus mindestens einem nanoskaligen Oxid und/oder Mischoxid , Oxidhydroxide sind hiermit eingeschlossen, aus der Reihe der Elemente Si, Al, Ti und/oder Zr, beispielsweise SiO₂, wie pyrogen hergestellte Kieselsäure, Silikate, Aluminiumoxid, Aluminiumhydroxid, Alumosilikate, TiO₂, Titanate, ZrO₂ oder Zirkonate oder aus einem mikroskaligen Korundpartikel.

Hierbei setzt man erfindungsgemäß als Komponente (a) des Oxidpartikelgemischs (i) vorzugsweise mindestens ein nanoskaliges Oxid und/oder Mischoxid aus der Reihe der Elemente Si, Al, Ti und/oder Zr ein, wobei das nanoskalige Oxid bevorzugt eine mittlere Korngröße von 1 bis 200 nm aufweist. Besonders bevorzugt setzt man als Komponente (a) eine nanoskalige Kieselsäure ein.

Ferner wird als Komponente (b) des Oxidpartikelgemischs (i) ein mikroskaliger Korund (α-Al₂O₃) bevorzugt, wobei dieser vorzugsweise eine mittlere Korngröße von 3 bis 40 µm, besonders bevorzugt 9 bis 18 µm, ganz besonders bevorzugt 12 bis 15 µm, aufweist.

Weiterhin ist Gegenstand der vorliegenden Erfindung ein Verfahren zur Herstellung einer pastösen siliciumorganische Nano- und/oder Mikrohybridkapseln enthaltenden Zusammensetzung für kratz- und/oder abriebfeste Beschichtungen, das dadurch gekennzeichnet ist, dass man
(i) Oxidpartikeln aus der Reihe
   (a) mindestens einem nanoskaligen Oxid und/oder Mischoxid mindestens eines Metalls oder Halbmetalls der zweiten bis sechsten Hauptgruppe, der ersten bis achten Nebengruppe des Periodensystems der Elemente oder der Lanthanide oder
   (b) einem mikroskaligen Korund oder
   (c) einem Oxidpartikelgemisch aus (a) und (b), mit
(ii) mindestens einem organofunktionellen Silan der allgemeinen Formel II

   R¹ ₛR² ᵣSiY₍₄₋ₛ₋ᵣ₎ (II),

   worin die Gruppen R¹ und R² gleich oder verschieden sind und jeweils eine lineare, verzweigte oder cyclische Alkylgruppe mit 1 bis 50 C-Atomen, eine Alkenylgruppe mit 2 bis 6 C-Atomen, eine Chloralkyl-, Isocyanoalkyl-, Cyanoalkyl-, Fluoralkyl-, Aryl-, Acylalkyl-, Acryloxyalkyl-, Methacryloxyalkyl-, Polysulfanalkyl-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellen, Y eine Methoxy-, Ethoxy-, i-Propoxy-, n-Propoxy- oder 2-Methoxyethoxy-Gruppe darstellt und s gleich 1 oder 2 oder 3 und r gleich 0 oder 1 oder 2 sind, mit der Maßgabe (s+r) ≤ 3,
   und
(iii) gegebenenfalls einem monomeren und/oder oligomeren Kieselsäureester, der Methoxy-, Ethoxy-, n-Propoxy- oder i-Propoxygruppen trägt und einen mittleren Oligomerisierungsgrad von 1 bis 50 aufweist,
   und
(iv) gegebenenfalls einem organofunktionellen Siloxan, dessen Funktionalitäten gleich oder verschieden sind und jedes Si-Atom im Siloxan eine Funktionalität aus der Reihe Alkyl, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy trägt und die verbleibenden freien Valenzen der Si-Atome im Siloxan durch Methoxy- oder Ethoxy- oder Hydroxy-Gruppen gesättigt sind,
in situ in einem flüssigen, härtbaren Kunstharz oder einer Vorläuferstufe eines Kunstharzes umsetzt, der Gehalt an Oxidpartikel der Komponente (i) 10 bis 300 Gew.-Teile, bezogen auf 100 Gew.-Teile der eingesetzten Kunstharzkomponente, beträgt und man die Umsetzung in einem Knet- oder Dispergieraggregat, vorzugsweise in einer Torusmill® unter ausschließlichem Einsatz des Dissolvers, durchführt.

Bevorzugt verfährt man bei der Durchführung des erfindungsgemäßen Verfahrens so, dass man
- das härtbare Kunstharz oder eine Vorläuferstufe eines härtbaren Kunstharzes in einem Knet- oder Dispergieraggregat vorlegt und erwärmt, vorzugsweise erwärmt man auf 50 bis 90 °C, besonders bevorzugt auf 60 bis 80 °C, ganz besonders bevorzugt auf 65 bis 75 °C, insbesondere auf >70 °C,
- Katalysator, gegebenenfalls Netzmittel und Wasser zugibt,
- Komponenten (ii) bis (iv) einbringt und anschließend
- Oxidpartikel (i) unter guter Durchmischung zusetzt.
Geeigneterweise entfernt man anschließend bei der Umsetzung entstandenen Alkohol aus dem System, lässt die Masse abkühlen und erhält eine erfindungsgemäße pastöse Zusammensetzung.

Vorzugsweise setzt man beim erfindungsgemäßen Verfahren als härtbares Kunstharz oder Vorläuferstufe eines härtbaren Kunstharzes ein Acrylat, Methacrylat, Epoxid, Epoxidharz, Polyurethan, Polyurethanharz, ungesättigte Polyester, ungesättigtes Polyesterharz, Epoxyacrylat, Polyesteracrylat, Urethanacrylat, Siliconacrylate oder Gemische aus zwei oder mehreren der zuvor genannten Komponenten ein.

Insbesondere, aber nicht ausschließlich kann man als organofunktionelle Silane gemäß Formel II folgende Verbindungen einsetzen: Methyltrimethoxysilan (DYNASYLAN® MTMS), Methyltriethoxysilan (DYNASYLAN® MTES), Propyltrimethoxysilan (DYNASYLAN® PTMO), Propyltriethoxysilan (DYNASYLAN® PTEO), i-Butyltrimethoxysilan (DYNASYLAN® IBTMO), i-Butyltriethoxysilan (DYNASYLAN® IBTEO), Octyltrimethoxysilan (DYNASYLAN® OCTMO), Octyltriethoxysilan (DYNASYLAN® OCTEO), Hexadecyltrimethoxysilan (DYNASYLAN® 9116), Hexadecyltriethoxysilan (DYNASYLAN® 9216), 3-Chlorpropyltrialkoxysilane, 3-Brompropylalkoxysilane, 3-Jodpropylalkoxysilane, 3-Chlorpropyltrichlorsilane, 3-Chlorpropylmethyldialkoxysilane, 3-Chlorpropylmethyldichlorsilane, 3-Chlorpropyldimethylalkoxysilane, 3-Chlorpropyldimethylchlorsilane, 3-Aminopropylmethyldialkoxysilane, 3-Aminopropyltrialkoxysilane, u. a. 3-Aminopropyltrimethoxysilan (DYNASYLAN® AMMO), 3-Aminopropyltriethoxysilan (DYNASYLAN® AMEO), N-(n-Butyl)-3-aminopropyltrimethoxysilan (DYNASYLAN® 1189), n-Aminoethyl-3-aminopropylmethyldimethoxysilan (DYNASYLAN® 1411), 3-Aminopropylmethyldiethoxysilan (DYNASYLAN® 1505), N-Aminoethyl-3-aminopropylmethyldialkoxysilan, N-Aminoethyl-3-aminopropyltrimethoxysilan (DYNASYLAN® DAMO), triaminofunktionelles Propyltrimethoxysilan (DYNASYLAN® TRIAMO), u. a. [N-Aminoethyl-N'-(3-trialkoxysilylpropyl)]ethylendiamine sowie [N-Aminoethyl-N-(3-trialkoxysilylpropyl)]ethylendiamine, triaminofunktionelle Propylmethyldialkoxysilane, 3-(4,5-Dihydroimidazolyl)propyltriethoxysilan (DYNASYLAN® IMEO), 3-Methacryloxypropylalkoxysilane, 3-Methacryloxypropyltrimethoxysilan (DYNASYLAN® MEMO), 3-Methacryloxyisobutyltrialkoxysilane, 3-Glycidyloxypropyltrialkoxysilane, 3-Glycidyloxypropyltrimethoxysilan (DYNASYLAN® GLYMO), 3-Glycidyloxypropyltriethoxysilan (DYNASYLAN® GLYEO), 3-Glycidyloxypropyl-methyldiethoxysilan, 3-Mercaptopropylalkoxysilane, 3-Mercaptopropyltrimethoxysilan (DYNASYLAN® MTMO), Vinyltrialkoxysilane, u. a. Vinyltrimethoxysilan (DYNASYLAN® VTMO), Vinyltriethoxysilan (DYNASYLAN® VTEO), Vinyltris(2-methoxyethoxy)silan (DYNASYLAN® VTMOEO), Perfluoralkyltrialkoxysilane, Fluoralkyltrialkoxysilane, u. a. Tridecafluoroctyltrimethoxysilan, Tridecafluoroctyltriethoxysilan (DYNASYLAN® F 8261), Tridecafluoroctylmethyldialkoxysilane, Trimethylchlorsilan, Triethylchlorsilan, (H₅C₂O)₃Si(CH₂)₃-S₄-(CH₂)₃Si(OC₂H₅)₃ 1,4-Bis(3-triethoxysilylpropyl)tetrasulfan (Si-69), (H₅C₂O)₃Si(CH₂)₃-NCS 3-Thiacyamidopropyltriethoxysilan (Si-264), (H₅C₂O)₃Si(CH₂)₃-S₂-(CH₂)₃Si(OC₂H₅)₃ 1,2-Bis(3-triethoxysilylpropyl)disulfan (Si-266), 3-Cyanopropyltrialkoxysilane, u. a. 3-Cyanopropyltrimethoxysilan, N,N',N"-Tris(trimethoxysilylpropyl)triisocyanurat, 3-[Methoxy(polyethylenglycid)]propyltrialkoxysilane, Allyltrialkoxysilane, Allylmethyldialkoxysilan, Allyldimethylalkoxysilan, 3-Methacryloxy-2-methylpropyltrialkoxysilane, 3-Amino-2-methylpropyltrialkoxysilane, (Cyclohex-3-enyl)-ethyltrialkoxysilane, N-(3-Trialkoxysilylpropyl)alkylcarbamate, 3-Azidopropyltrialkoxysilane, 4-(2-Trialkoxysilylethyl)-1,2-epoxycyclohexane, Bis(3-alkoxysilylpropyl)amine, Tris(3-alkoxysilylpropyl)amine, 3-Acryloxypropyltrialkoxysilane, u. a. 3-Acryloxymethyldialkoxysilan, 3-Acryloxydimethylalkoxysilan, wobei für eine der zuvor genannten Alkoxygruppen vorteilhaft Methoxy, Ethoxy, 2-Methoxyethoxy, Propoxy oder Acetoxy steht.

Besonders bevorzugt setzt man erfindungsgemäß als Komponente (ii) 3-Methacryloxypropyltrimethoxysilan, 3-Methacryloxypropyltriethoxysilan, 3-Methacryloxypropylmethyldimethoxysilan, 3-Methacryloxypropylmethyldiethoxysilan, 3-Methacryloxy-2-methyl-propyltrimethoxysilan, 3-Methacryloxy-2-methyl-propyltriethoxysilan, Vinyltrimethoxysilan, Vinyltriethoxysilan, Vinylmethyldimethoxysilan, Vinylmethyldiethoxysilan, Phenyltrimethoxysilan, Phenyltriethoxysilan, n-Propyltrimethoxysilan und/oder n-Propyltriethoxysilan oder eine Mischung zuvor genannter Silane ein. Besonders bevorzugt ist eine Mischung aus einem n-Propylalkoxysilan und einem Vinylalkoxysilan.

Als Komponente (iv) setzt man erfindungsgemäß vorzugsweise ein oligomeres Vinyltrimethoxysilan (DYNASYLAN® 6490), ein oligomeres Propyltrimethoxysilan, ein oligomeres Vinyltrimethoxysilan, ein oligomeres 3-Methacryloxypropyltrimethoxysilan oder ein Cooligomerisat aus Propyltrimethoxysilan und Vinyltrimethoxysilan, aus 3-Methacryloxypropyltrimethoxysilan und Propyltrimethoxysilan, oder aus 3-Methacryloxypropyltrimethoxysilan und Phenyltrimethoxysilan oder aus 3-Methacryloxypropyltrimethoxysilan und Tridecafluor-1,1,2,2-tetrahydrooctyltriethoxysilan oder aus 3-Methacryloxypropyltrimethoxysilan und Tridecafluor-1,1,2,2-tetrahydrooctyltrimethoxysilan oder aus Vinyltrimethoxysilan und Tridecafluor-1,1,2,2-tetrahydrooctyltrimethoxysilan oder aus Vinyltrimethoxysilan und Tridecafluor-1,1,2,2-tetrahydrooctyltriethoxysilan ein, um nur einige bevorzugte Beispiele anzuführen. Man kann aber auch Cooligomerisate, die aus mehr als zwei der oben genannten monomeren Organoalkoxysilane (ii) sowie (iii) erhältlich sind, einsetzen, wobei ein solches Cooligomerisat vorzugsweise zumindest eine Vinyl- oder 3-Methacryloxypropyl-Gruppe trägt.

Im Allgemeinen legt man beim erfindungsgemäßen Verfahren die in der Regel flüssigen Komponenten des Präpolymeren im Knet-oder Dispergieraggregat vor und erwärmt, gibt eine definierte Menge Wasser, gegebenenfalls Katalysator, gegebenenfalls Netzmittel sowie die siliciumorganischen Komponenten (ii) bis (iv) zu und bringt im Anschluss daran die Komponente (i) unter guter Durchmischung ein, beispielsweise als Gemisch der Oxide (a) und (b). D. h., geeigneterweise bringt man zunächst die Kunstharzkomponenten, Katalysator, Netzhilfsmittel, Wasser und die siliciumorganischen Komponenten, gegebenenfalls weitere Hilfsstoffe zusammen, mischt und erst dann setzt man die oxidische Komponente (i) zu, wobei sich ein nach dieser Herstellweise erhaltenes Komponentengemisch insbesondere auch durch ein gutes Verarbeitungsverhalten auszeichnet. Der bei der Umsetzung entstandene Alkohol kann während der Umsetzung, vorzugsweise danach, aus der Masse entfernt werden. Anschließend lässt man geeigneterweise abkühlen und erhält eine erfindungsgemäße Masse.

Bevorzugt setzt man beim erfindungsgemäßen Verfahren 35 bis 200 Gew.-Teile, besonders bevorzugt 60 bis 180 Gew.-Teile, ganz besonders bevorzugt 80 bis 160 Gew.-Teile, insbesondere > 80 bis 140 Gew.-Teile, beispielsweise 90 bis 120 Gew.-Teile, oxidische Komponente der Oxidpartikel (i) (KA-O), bezogen auf 100 Gew.-Teile des Kunstharzes, ein.

Dabei kann man die Komponenten (a) oder (b) alleine einsetzen. Setzt man ein Gemisch (c) aus (a) und (b) ein, so bevorzugt man ein Gewichtsverhältnis (a): (b) von 1 : 10 bis 5 : 1. Besonders bevorzugt setzt man ein Oxidpartikelgemisch (c) mit einem Gewichtsverhältnis der Komponenten (a) und (b) von 1 : 3 bis 1 : 1, ganz besonders bevorzugt ein Gewichtsverhältnis (a) : (b) von 1 : 2, ein.

Vorzugsweise setzt man beim erfindungsgemäßen Verfahren ein nanoskaliges Oxid und/oder Mischoxid (a) mit einem durchschnittlichen Partikeldurchmesser von 1 bis 100 nm, besonders vorzugsweise von 5 bis 50 nm und ganz besonders vorzugsweise von 10 bis 40 nm, ein. Dabei können die Oxide bzw. Mischoxide eine BET-Oberfläche von 40 bis 400 m²/g, vorzugsweise von 60 bis 250 m²/g, besonders vorzugsweise von 80 bis 250 m²/g, besitzen. Als nanoskalige Oxide oder Mischoxide kann man beispielsweise - aber nicht ausschließlich - pyrogene Kieselsäure, die durch weitere Metall- oder Halbmetallanteile modifiziert sein kann, wie Aluminium, Titan, Eisen oder Zirkon, einsetzen.

Als oxidische Komponente (b) setzt man geeigneterweise einen mikroskaligen Korund mit einer mittleren Korngröße d₅₀ von 9 bis 15 um ein.

Ferner ist bevorzugt, dass man die oxidische Komponente (i), bestehend aus den Einzelkomponenten (a) oder (b) oder (c), und mindestens eine silanbasierende Komponente, insbesondere (ii), (iii) und/oder (iv), in einem Gewichtsverhältnis von 100 : 1 bis 0,5 : 1, besonders bevorzugt von 10 : 1 bis 0,5 : 1, ganz besonders bevorzugt von 3 : 1 bis 1 : 1, einsetzt.

Als flüssiges bzw. härtbares Kunstharz oder als Vorläuferstufe eines flüssigen, härtbaren Kunstharzes, d. h. einem Präpolymer oder einem Gemisch aus Präpolymeren, verwendet man beim erfindungsgemäßen Verfahren beispielsweise Acrylate, Methacrylate, Epoxide, Epoxidharze, Polyurethane, Polyurethanharze, ungesättigte Polyester, ungesättigte Polyesterharze, Epoxyacrylate, Polyesteracrylate, Urethanacrylate, Siliconacrylate, polyfunktionelle monomere Acrylate, wie Trimethylolpropantriacrylat, Trimethylolpropantrimethacrylat, ethoxyliertes Trimethylolpropantriacrylat, propoxyliertes Trimethylolpropantriacrylat, Pentaerythrittriacrylat, ethoxyliertes Pentaerythritoltetraacrylat, alkoxylierte Tetraacrylate, Di-trimethylolpropantetraacrylate, 3,4-Epoxycyclohexan-1-carbonsäure-3,4-epoxycyclohexyl-1'-methylester, 1,6-Hexandioldiacrylat - um nur einige Beispiele zu nennen - oder Gemische aus zwei oder mehreren der zuvor genannten Kunstharze bzw. Präpolymeren, beispielsweise Gemische aus mono- und/oder bifunktionellen bzw. polyfunktionellen monomeren, gegebenenfalls niedrigviskosen Acrylaten.

Die erfindungsgemäße Umsetzung erfolgt in der Regel in Gegenwart einer wohl definierten Menge an Wasser. Geeigneterweise setzt man dazu pro Mol Si der siliciumorganischen Komponenten 1 bis 6 Mol Wasser ein.

Vorzugsweise erfolgt beim vorliegenden Verfahren die besagte Umsetzung in Gegenwart definierter Mengen Wasser Bevorzugt setzt man pro Mol einer hydrolysierbaren, Si-gebundenen Gruppe der siliciumorganischen Komponenten 0,5 bis 6 Mol Wasser, besonders bevorzugt 0,5 bis 4 Mol Wasser, ganz besonders bevorzugt 1 bis 2 Mol Wasser, ein.

Ferner wird die erfindungsgemäße Umsetzung bevorzugt in Gegenwart eines Katalysators durchgeführt. Als Katalysator ist insbesondere eine Säure geeignet, vorzugsweise Maleinsäureanhydrid, Maleinsäure, Essigsäure, Essigsäureanhydrid, Glycolsäure, Zitronensäure, Methansulfonsäure, Phosphorsäure.

Weiterhin kann der Einsatz eines Netzmittels für die Durchführung der erfindungsgemäßen Umsetzung hilfreich sein. So führt man die Umsetzung vorzugsweise in Gegenwart von Natriumdodecylsulfat durch.

Beim erfindungsgemäßen Verfahren wird die Umsetzung bevorzugt bei einer Temperatur im Bereich von 30 bis 100 °C, vorzugsweise bei einer Temperatur im Bereich von 40 bis 90 °C, besonders bevorzugt bei 50 bis 80 °C, insbesondere bei 60 bis 75 °C, durchgeführt.

Durch Hydrolyse und Kondensation entsteht bei der erfindungsgemäßen Umsetzung in der Regel ein Alkohol, den man vorzugsweise während der Umsetzung und/oder danach aus dem Reaktionssystem entfernt. Das Entfernen des bei der Umsetzung entstandenen Alkohols kann destillativ, geeigneterweise unter vermindertem Druck, durchgeführt werden. In der Regel wird dabei der Gehalt an Alkohol im Produktgemisch, d. h. in der durch die erfindungsgemäße Umsetzung erhaltenen Zusammensetzung, auf < 2 Gew.%, vorzugsweise auf 0,01 bis 1 Gew.-%, besonders vorzugsweise auf 0,1 bis 0,5 Gew.-%, abgesenkt, sodass man in vorteilhafter Weise eine lösemittelfreie Zusammensetzung, d. h. eine lösemittelfreie Paste erhält.

Erfindungsgemäße Zusammensetzungen verwendet man insbesondere als Zusatzstoff oder als Basiskomponente für die Herstellung einer Beschichtungszusammensetzung oder eines Lacks zur Erzeugung kratz- und/oder abriebfester Beschichtungen.

Im Allgemeinen kann man erfindungsgemäße Zusammensetzungen für die Herstellung von Beschichtungsmitteln einsetzen und radikalisch, thermisch und/oder photo- oder strahlenchemisch härten.

Geeigneterweise kann man der erfindungsgemäßen Zusammensetzung bzw. dem daraus erhältlichen Lack weitere Komponenten zusetzen, beispielsweise Initiatoren für die UV- bzw. photochemische Lackhärtung, Darocur® 1173, Lucirin® TPO-L, Lackstabilisatoren, wie HALS-Verbindungen, Tinuvine® sowie Antioxidantien, wie Irganox®. Solche Zusatzstoffe werden in der Regel in Mengen von 0,1 bis 5 Gew.-%, vorzugsweise von 2 bis 3 Gew.-%, bezogen auf die Zubereitung bzw. den Lack, eingesetzt. Das Einbringen weiterer Komponenten in das Lacksystem erfolgt geeigneterweise unter guter Durchmischung. Die erfindungsgemäßen Zubereitungen bzw. Lacke zeichnen sich vorteilhaft trotz eines hohen Gehalts an siliciumorganischen Nano- bzw. Mikrohybridkapseln vorzugsweise durch eine vergleichsweise geringe Viskosität von 500 bis 1 000 mPa s aus. Dabei verhalten sich die Systeme in der Regel dilatant.

Somit ist auch Gegenstand der Erfindung die Verwendung einer erfindungsgemäßen pastösen siliciumorganische Nano- und/oder Mikrohybridkapseln enthaltenden Zusammensetzung für die Herstellung eines Lacks zur Erzeugung kratz- und/oder abriebfester Beschichtungen.

Weiterhin ist Gegenstand die erfindungsgemäße Verwendung, wobei man zur Herstellung des Lacks die pastöse siliciumorganische Nano- und/oder Mikrohybridkapseln enthaltende Zusammensetzung mit einem flüssigen Kunstharz, einer Vorläuferverbindung eines Kunstharzes und/oder einem Lösemittel in einfacher und wirtschaftlicher Weise unter Rühren verdünnt.

Die Applikation der besagten Zusammensetzung bzw. eines daraus hergestellten oder modifizierten Lacks erfolgt in der Regel durch Aufbringen auf ein Substrat. Für die Beschichtung von Substraten kann man die üblichen Beschichtungsverfahren anwenden, wie z. B. Walzenauftrag, Aufrakeln, Tauchen, Fluten, Gießen, Spritzen, Aufstreichen.

Beispielsweise kann man den Lack auf bahnförmige Substrate, wie Papier oder Metall- bzw. Kunststofffolien, durch Einsatz eines Walzauftragswerks gleichmäßig auftragen und anschließend härten. Es hat sich aber auch gezeigt, dass der lösemittelfreie Lack ohne Zusatz von Lösemittel mit herkömmlicher Spritztechnik im Spritzverfahren verarbeitet werden kann. Dadurch ist es möglich, dreidimensionale Substrate zu beschichten und zu härten. Geeigneterweise kann man die Beschichtung bei Umgebungstemperatur, d. h. Lacktemperatur, durch ein UV- oder Elektronenstrahlverfahren (ESH) umweltfreundlich, da lösemittelfrei, aushärten.

Bevorzugt erzeugt man für die Elektronenstrahl-Härtung Elektronen mit einer Energie von rd. 140 keV, wobei die Dosis bei 30 bis 60 kGy, vorzugsweise 40 bis 50 kGy, liegt. Vorzugsweise liegt der O₂-Restgehalt bei < 200 ppm. Geeigneterweise führt man die photochemische Härtung unter Schutzgas aus, beispielsweise unter Stickstoff oder Argon.

Man kann die Lackhärtung aber auch mittels UV-Bestrahlung durch Einsatz von mono- oder polychromatischen UV-Lampen mit einer Wellenlänge von 150 bis 400 nm durchführen. Auch bei der UV-Härtung kann man bei Umgebungstemperatur, beispielsweise zwischen 10 und 60°C, arbeiten. Auch hierbei liegt der O₂-Gehalt geeigneterweise bei < 200 ppm.

So kann man durch den Einsatz eines solchen Lacks in besonders vorteilhafter Weise hervorragend kratz- bzw. abriebfeste Beschichtungen erzeugen. Die Bestimmung der Ritzhärte bzw. Kratzfestigkeit erfolgt hier in der Regel gemäß DIN 53 799 unter Verwendung einer Hartmetallkugel. Der Abrieb kann beispielsweise nach DIN 52 347 unter Einsatz beschichteter Planscheiben erfolgen.

Erfindungsgemäße Beschichtungen weisen vorzugsweise eine Schichtdicke von 2 bis 100 µm, besonders bevorzugt von 5 bis 50 µm und ganz besonders bevorzugt von 5 bis 20 µm, auf.

So kann man in besonders einfacher und wirtschaftlicher Weise beispielsweise Metalle, wie Aluminium, Eisen, Stahl, Messing, Kupfer, Silber, Magnesium, Leichtmetalllegierungen, Holz, Papier, Pappe, Textilien, Steinwaren, Kunststoffe, Thermoplaste, Polycarbonat, Glas, Keramik, mit einer besonders kratz- und abriebfesten Beschichtung ausstatten. Die Auswahl der im Wesentlichen festen Substratmaterialien zur Beschichtung ist uneingeschränkt. Solche Substrate können beispielsweise mit einer UV- und bewitterungsstabilen Schutzbeschichtung ausgestattet werden, so genanntes "Topcoating", wie es beispielsweise als Klarlacksystem in der Automobilindustrie angewendet wird.

Insbesondere sind nach einem solchen Beschichtungsverfahren in einfacher und wirtschaftlicher Weise kratz- bzw. abriebfest ausgestattete Artikel, wie Dekorpapier, Aluminiumfolien, Polycarbonat-Autoscheiben, PVC-Fensterrahmen, Türen, Arbeitsplatten, Fußbodenbeläge, Parkettböden, um nur einige zu nennen, erhältlich.

Die vorliegende Erfindung wird durch die nachfolgenden Beispiele näher erläutert:

### Beispiele

### Einsatzstoffe:

Ebecryl® EB 1290: hexafunktionelles aliphatisches Urethanacrylat der Firme UCB Chemicals.
Ebecryl® EB 5129: Gemisch aus aliphatischem Urethanhexaacrylat und Pentaerythritoltri/tetraacrylat der Firma UCB Chemicals.
CN 936: aliphatisches Urethandiacrylat der Firma Cray Valley.
DPGDA: Dipropylenglycoldiacrylat der Firma UCB Chemicals.
HDDA: 1.6-Hexandioldiacrylat der Firma UCB Chemicals.
SR 444: Gemisch aus Pentaerythritoltri- und tetraacrylat der Firma Cray Valley.
DYNASYLAN® VTMO: Vinyltrimethoxysilan der Firma Degussa AG.
DYNASYLAN® 6490: Gemisch oligomerer Vinyltrimethoxysilane mit einem Oligomerisierungsgrad von 2 bis 12 - Kondensat der Firma Degussa AG.
Plakor® 13: synthetischer Korund (Korund-Mikropulver, d₅₀ = 13 µm) der Firma ESK-SIC GmbH.
AEROSIL® OX 50: pyrogene Kieselsäure (amorph, BET 50 m²/g, d₅₀ = 30 nm).
AEROSIL® 200: pyrogene Kieselsäure (amorph, BET = 200 m²/g, d₅₀ = 30 nm) der Firma Degussa AG.

### Beispiel 1

### Herstellung der Paste:

In einem Laborkneter (Firma Werner und Pfleiderer) wurden 3 kg CN936 sowie 9,1 g 4-Hydroxyanisol vorgelegt und auf 60 bis 65 °C erwärmt. Zum erwärmten Acrylat wurden unter intensivem Kneten innerhalb von 5 Minuten eine Lösung von 90 g Maleinsäureanhydrid in 0,75 kg Wasser sowie innerhalb von 30 Minuten 3 kg DYNASYLAN® VTMO gegeben. Anschließend dosierte man im oben angegebenen Temperaturbereich unter fortwährendem Kneten 3 kg AEROSIL® OX50 innerhalb von einer Stunde. Zur weitgehenden hydrolytischen Kondensation des Silans und zur Entfernung von Methanol/Wasser setzte man den Knetprozess bei 65 bis 70 °C noch 2 Stunden unter vermindertem Druck (ca. 50 bis 100 Torr) fort. Zuletzt wurde der Ansatz auf Raumtemperatur abgekühlt.

### Herstellung des anwendungsfertigen Lacks:

In einem Rührgefäß wurden 1 kg SR444 auf ca. 40 °C erwärmt. Anschließend trug man bei dieser Temperatur unter fortwährendem intensiven Rühren innerhalb von 30 Minuten 667 g der oben erhaltenen Paste ein. Nach weiterem einstündigen Rühren wurde der Ansatz auf Raumtemperatur abgekühlt.

### Beispiel 2

### Herstellung der Paste:

In einem Laborkneter (Firma Werner und Pfleiderer) wurden 3 kg EB1290 sowie 9,5 g 4-Hydroxyanisol vorgelegt und auf 60 bis 65 °C erwärmt. Zum erwärmten Acrylat wurden unter intensivem Kneten innerhalb von 5 Minuten eine Lösung von 28,5 g Maleinsäureanhydrid in 0,26 kg Wasser sowie innerhalb von 30 Minuten 0,949 kg DYNASYLAN® VTMO gegeben. Anschließend dosierte man im oben angegebenen Temperaturbereich unter fortwährendem Kneten 1,323 kg Plakor® 13 und 1,853 kg AEROSIL® OX50 innerhalb von einer Stunde. Zur weitgehenden hydrolytischen Kondensation des Silans und zur Entfernung von Methanol/Wasser setzte man den Knetprozess bei 65 bis 70 °C noch 2 Stunden unter vermindertem Druck (ca. 50 bis 100 Torr) fort. Zuletzt wurde der Ansatz auf Raumtemperatur abgekühlt.

### Herstellung des anwendungsfertigen Lacks:

In einem Rührgefäß wurden 1,412 kg DPGDA auf ca. 40 °C erwärmt. Anschließend trug man bei dieser Temperatur unter fortwährendem intensiven Rühren innerhalb von einer Stunde die Gesamtmenge der oben erhaltenen Paste ein. Nach weiterem einstündigen Rühren wurde der Ansatz auf Raumtemperatur abgekühlt.

### Vergleichsbeispiel zu Beispiel 2

In einem Rührgefäß wurden 15,78 kg EB 1290 und 7,43 kg DPGDA sowie 48 g 4-Hydroxyanisol vorgelegt und auf 65 bis 70 °C erwärmt. Zum erwärmten Acrylat wurden eine Lösung von 0,15 kg Maleinsäureanhydrid in 1,364 kg Wasser sowie innerhalb von 30 Minuten 4,988 kg DYNASYLAN® VTMO gegeben. Anschließend dosierte man im oben angegebenen Temperaturbereich unter intensiven Rühren 6,96 kg Plakor® 13 und 9,74 kg AEROSIL® OX 50 innerhalb von einer Stunde. Man rührte noch 1 Stunde bei 65 bis 70 °C weiter und destillierte dann im Vakuum das durch die Hydrolyse des Silans entstandene Methanol ab. Zuletzt wurde der Ansatz auf Raumtemperatur abgekühlt.

### Beispiel 3

### Herstellung der Paste:

In einer Torusmill® 20 C (VMA-Getzmann GmbH) wurden 11,22 kg Ebecryl® 5129 sowie 43,2 g 4-Hydroxyanisol vorgelegt und unter Rühren (typisch 500 bis 1 000 U/min, Dissolver) auf 75 °C erwärmt. Zum erwärmten Acrylat wurden eine Lösung von 135 g Maleinsäure in 0,81 kg Wasser sowie innerhalb von 5 bis 10 Minuten 2,98 kg DYNASYLAN® 6490 gegeben. Anschließend dosierte man bei der oben angegeben Temperatur und 1 000 bis 2 000 U/min Rührgeschwindigkeit (Dissolver) 5,97 kg AEROSIL® 200 derart, dass das Reaktionsgemisch noch gut rührbar blieb, wofür 3 bis 4 Stunden Dosierzeit nötig waren. In der zweiten Zeithälfte der AEROSIL-Dosierung war außerdem eine intervallmäßige Zugabe von HDDA erforderlich, um Verrührbarkeit zu gewährleisten, insgesamt wurden dazu 3,3 kg HDDA gebraucht. Man rührte mittels Dissolver noch 2 Stunden bei 75 °C und 2 000 bis 3 000 U/min nach, überführte den noch fließfähigen Lack in ein geeignetes Gefäß und ließ auf Raumtemperatur abkühlen, wobei allmähliche Erstarrung zu einer pastösen Masse eintrat.

Herstellung des anwendungsfertigen Lacks aus der gemäß Beispiel 3 hergestellten Paste:

### Beispiel 3.1

In einem Rührgefäß wurden 0,374 kg HDDA auf ca. 40 °C erwärmt. Anschließend trug man bei dieser Temperatur unter fortwährendem intensiven Rühren innerhalb von 30 Minuten 1 kg Paste ein. Nach weiterem einstündigen Rühren wurde der Ansatz auf Raumtemperatur abgekühlt.

### Beispiel 3.2

In einem Rührgefäß wurden 0,279 kg HDDA auf ca. 40 °C erwärmt. Anschließend trug man bei dieser Temperatur unter fortwährendem intensiven Rühren innerhalb von 30 Minuten 1 kg Paste ein. Nach weiterem einstündigen Rühren wurde der Ansatz auf Raumtemperatur abgekühlt.

### Beispiel 3.3

In einem Rührgefäß wurden 0,209 kg HDDA auf ca. 40 °C erwärmt. Anschließend trug man bei dieser Temperatur unter fortwährendem intensiven Rühren innerhalb von 30 Minuten 1 kg Paste ein. Nach weiterem einstündigen Rühren wurde der Ansatz auf Raumtemperatur abgekühlt.

### Beispiel 4

In einer Torusmill® 20 C (VMA-Getzmann GmbH) wurden 11,22 kg Ebecryl® 1290 sowie 43,2 g 4-Hydroxyanisol vorgelegt und unter Rühren (typisch 500 bis 1 000 U/min, Dissolver) auf 75 °C erwärmt. Zum erwärmten Acrylat wurden eine Lösung von 135 g Maleinsäure in 0,81 kg Wasser sowie innerhalb von 5 bis 10 Minuten 2,98 kg DYNASYLAN® 6490 gegeben. Anschließend dosierte man bei der oben angegeben Temperatur und 1 000 bis 2 000 U/min Rührgeschwindigkeit (Dissolver) 5,97 kg AEROSIL® 200 derart, dass das Reaktionsgemisch noch gut rührbar blieb, wofür 3 bis 4 Stunden Dosierzeit nötig waren. In der zweiten Zeithälfte der AEROSIL-Dosierung war außerdem eine intervallmäßige Zugabe von HDDA erforderlich, um Verrührbarkeit zu gewährleisten, insgesamt wurden dazu 3,3 kg HDDA gebraucht. Man rührte noch 2 Stunden bei 75 °C und 2 000 bis 3 000 U/min mittels Dissolver nach, überführte den noch fließfähigen Lack in ein geeignetes Gefäß und ließ auf Raumtemperatur abkühlen, wobei allmähliche Erstarrung zu einer pastösen Masse eintrat.

Herstellung desanwendungsfertigen Lacks aus der gemäß Beispiel 4 hergestellten Paste:

### Beispiel 4.1

In einem Rührgefäß wurden 0,498 kg HDDA auf ca. 40 °C erwärmt. Anschließend trug man bei dieser Temperatur unter fortwährendem intensiven Rühren innerhalb von 30 Minuten 1 kg Paste ein. Nach weiterem einstündigen Rühren wurde der Ansatz auf Raumtemperatur abgekühlt.

### Beispiel 4.2

In einem Rührgefäß wurden 0,372 kg HDDA auf ca. 40 °C erwärmt. Anschließend trug man bei dieser Temperatur unter fortwährendem intensiven Rühren innerhalb von 30 Minuten 1 kg Paste ein. Nach weiterem einstündigen Rühren wurde der Ansatz auf Raumtemperatur abgekühlt.

### Beispiel 4.3

In einem Rührgefäß wurden 0,279 kg HDDA auf ca. 40 °C erwärmt. Anschließend trug man bei dieser Temperatur unter fortwährendem intensiven Rühren innerhalb von 30 Minuten 1 kg Paste ein. Nach weiterem einstündigen Rühren wurde der Ansatz auf Raumtemperatur abgekühlt.

### Anwendungsbeispiele

Die anwendungsfertigen Lacke aus den Beispielen 1, 2, 3.1 bis 3.3, 4.1 bis 4.3 sowie aus dem Vergleichsbeispiel wurden zur Bestimmung des Abriebs auf Dekorpapier mit einem Rakel der Spaltbreite 25 µm und zur Bestimmung der Ritzhärte auf quadratische PVC-Platten (Kantenlänge 10 cm, Dicke 2 mm) mit einem Rakel der Spaltbreite 50 µm aufgetragen und im Niederenergie-Elektronenbeschleuniger (140 keV) mit einer Dosis von 50 kGy ausgehärtet. Der Sauerstoff-Restgehalt im Beschleuniger betrug < 200 ppm.

Die Proben wurden auf ihre Ritzhärte gemäß DIN 53 799 unter Einsatz einer Diamantspitze und einer Hartmetallkugel getestet. Ferner wurden die Proben auf Abriebfestigkeit gemäß DIN 68 861 unter Verwendung von Schmirgelpapier S-42, 2 Reibräder CS-0 bei 50 und 1 000 Umdrehungen getestet. Weiterhin wurden Proben gemäß DIN 52 347 (Haze) und D-1044 (ASTM) getestet. Die jeweiligen Versuchsergebnisse sind in Tabelle 1 bzw. 2 zusammengestellt.

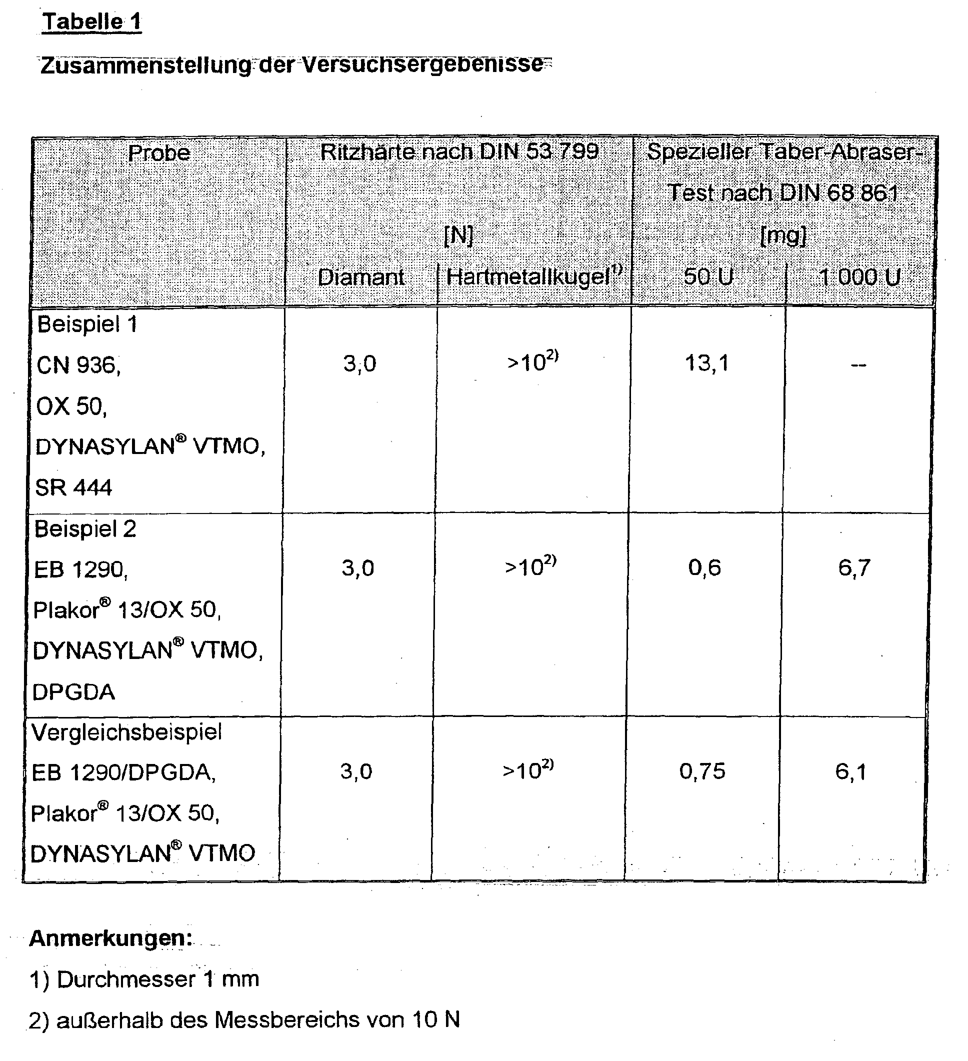

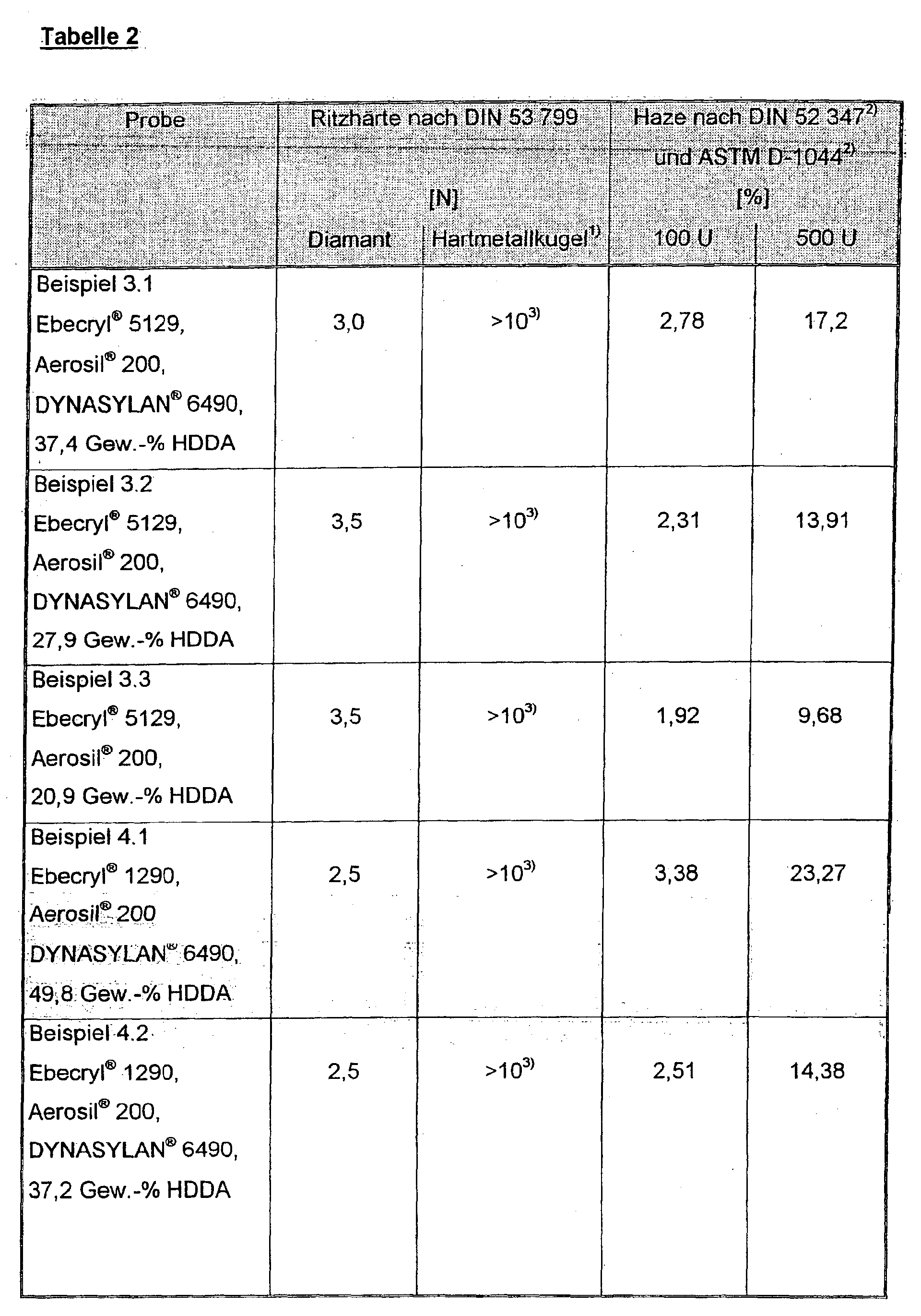

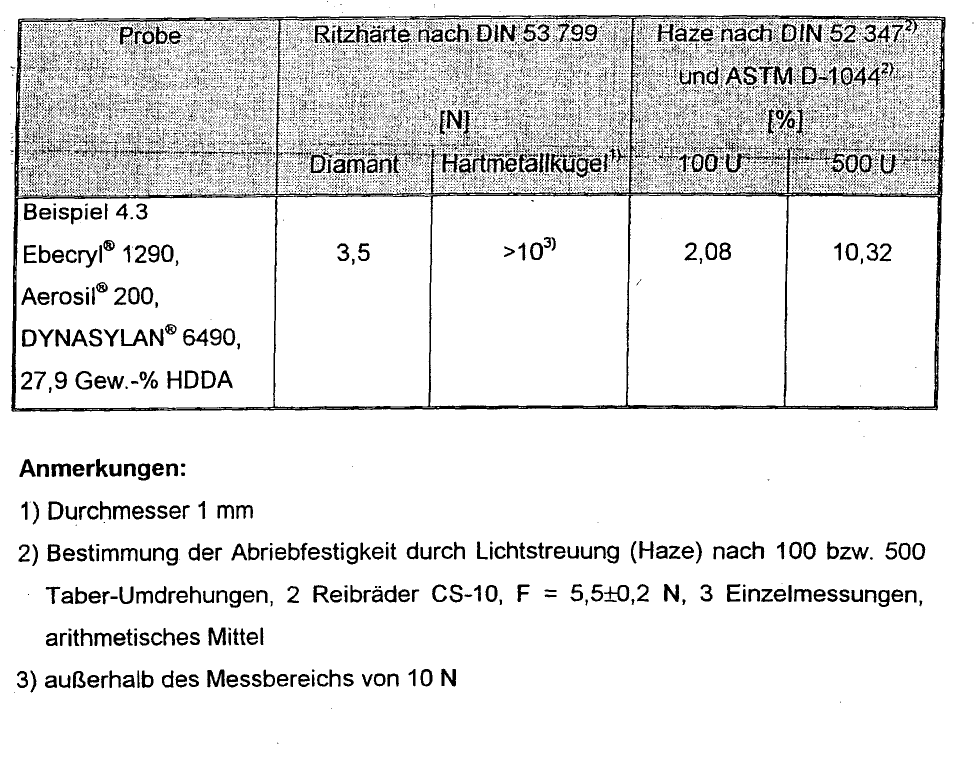

## Patentansprüche

1. Hochgefüllte pastöse siliciumorganische Nano- und/oder Mikrohybridkapseln enthaltende Zusammensetzung für kratz und/oder abriebfeste Beschichtungen,
wobei eine siliciumorganische Nano- bzw. Mikrohybridkapsel aus einem oxidischen Kern A, der mindestens ein nanoskaliges oder mikroskaliges Oxidpartikel (KA-O) der Komponenten (a) und/oder (b) enthält, und einer siliciumorganischen Umhüllung B besteht und die siliciumorganische Umhüllung B mindestens einen siliciumorganischen Bestandteil der allgemeinen Formel la
(Si'O-)ₓSi-R, (Ia),
worin R für eine organofunktionelle Gruppe steht und x eine Zahl von 0 bis 20 ist, die noch freien Valenzen von Si durch SiO- und/oder -Z und die freien Valenzen von Si' durch SiO-, -R und/oder -Z gesättigt sind, die Gruppen Z gleich oder verschieden sind und Hydroxy- oder Alkoxy-Reste darstellen, und jedes Si bzw. Si' der Umhüllung B maximal eine Gruppe R trägt,
enthält und/oder der siliciumorganische Bestandteil der Umhüllung B über eine oder mehrere kovalente Bindungen der allgemeinen Formel Ib
(KA-O)-[(Si'O-)ₓSi-R] (Ib),
worin R die oben genannte Bedeutung besitzt und x eine Zähl von 0 bis 20 ist, die noch freien Valenzen von Si durch (KA-O)-, SiO- und/oder -Z und die freien Valenzen von Si' durch (KA-O)-, SiO-, -R und/oder -Z gesättigt sind, die Gruppen Z gleich oder verschieden sind und Hydroxyoder Alkoxy-Reste darstellen, und jedes Si bzw. Si' der Umhüllung B maximal eine Gruppe R trägt,
an den Kern A (KA-O) gebunden ist,
erhältlich durch eine Umsetzung von
(i) Oxidpartikeln aus der Reihe
(a) mindestens einem nanoskaligen Oxid und/oder Mischoxid mindestens eines Metalls oder Halbmetalls der zweiten bis sechsten Hauptgruppe, der ersten bis achten Nebengruppe des Periodensystems der Elemente oder der Lanthanide oder
(b) einem mikroskaligen Korund oder
(c) einem Oxidpartikelgemisch aus (a) und (b),
mit
(ii) mindestens einem organofunktionellen Silan der allgemeinen Formel II
R¹ ₛR² ᵣSiY₍₄₋ₛ₋ᵣ₎ (II),
worin die Gruppen R¹ und R² gleich oder verschieden sind und jeweils eine lineare, verzweigte oder cyclische Alkylgruppe mit 1 bis 50 C-Atomen, eine Alkenylgruppe mit 2 bis 6 C-Atomen, eine Chloralkyl-, Isocyanoalkyl-, Cyanoalkyl-, Fluoralkyl-, Aryl-, Acylalkyl-, Acryloxyalkyl-, Methacryloxyalkyl-, Polysulfanalkyl-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellen, Y eine Methoxy-, Ethoxy-, i-Propoxy-, n-Propoxy- oder 2-Methoxyethoxy-Gruppe darstellt und s gleich 1 oder 2 oder 3 und r gleich 0 oder 1 oder 2 sind, mit der Maßgabe (s+r) ≤ 3,
und
(iii) gegebenenfalls einem monomeren und/oder oligomeren Kieselsäureester, der Methoxy-, Ethoxy-, n-Propoxy- oder i-Propoxygruppen trägt und einen mittleren Oligomerisierungsgrad von 1 bis 50 aufweist,
und
(iv) gegebenenfalls einem organofunktionellen Siloxan, dessen Funktionalitäten gleich oder verschieden sind und jedes Si-Atom im Siloxan eine Funktionalität aus der Reihe Alkyl, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy trägt und die verbleibenden freien Valenzen der Si-Atome im Siloxan durch Methoxy- oder Ethoxy- oder Hydroxy-Gruppen gesättigt sind,
wobei die Umsetzung in situ in einem flüssigen, härtbaren Kunstharz oder einer Vorläuferstufe eines Kunstharzes erfolgt, der Gehalt an Oxidpartikel der Komponente (i) 10 bis 300 Gew.-Teile, bezogen auf 100 Gew.-Teile der eingesetzten Kunstharzkomponente, beträgt und man die Umsetzung in einem Knet- oder Dispergieraggregat durchgeführt.

2. Verfahren zur Herstellung einer pastösen siliciumorganische Nano- und/oder Mikrohybridkapseln enthaltenden Zusammensetzung für kratz- und/oder abriebfeste Beschichtungen nach Anspruch 1,
**dadurch gekennzeichnet,**
**dass** man
(i) Oxidpartikeln aus der Reihe
(a) mindestens einem nanoskaligen Oxid und/oder Mischoxid mindestens eines Metalls oder Halbmetalls der zweiten bis sechsten Hauptgruppe, der ersten bis achten Nebengruppe des Periodensystems der Elemente oder der Lanthanide oder
(b) einem mikroskaligen Korund oder
(c) einem Oxidpartikelgemisch aus (a) und (b),
mit
(ii) mindestens einem organofunktionellen Silan der allgemeinen Formel II
R¹ ₛR² ᵣSiY₍₄₋ₛ₋ᵣ₎ (II),
worin die Gruppen R¹ und R² gleich oder verschieden sind und jeweils eine lineare, verzweigte oder cyclische Alkylgruppe mit 1 bis 50 C-Atomen, eine Alkenylgruppe mit 2 bis 6 C-Atomen, eine Chloralkyl-, Isocyanoalkyl-, Cyanoalkyl-, Fluoralkyl-, Aryl-, Acylalkyl-, Acryloxyalkyl-, Methacryloxyalkyl-, Polysulfonalkyl-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellen, Y eine Methoxy-, Ethoxy-, i-Propoxy-, n-Propoxy- oder 2-Methoxyethoxy-Gruppe darstellt und s gleich 1 oder 2 oder 3 und r gleich 0 oder 1 oder 2 sind, mit der Maßgabe (s+r) ≤ 3,
und
(iii) gegebenenfalls einem monomeren und/oder oligomeren Kieselsäureester, der Methoxy-, Ethoxy-, n-Propoxy- oder i-Propoxygruppen trägt und einen mittleren Oligomerisierungsgrad von 1 bis 50 aufweist,
und
(iv) gegebenenfalls einem organofunktionellen Siloxan, dessen Funktionalitäten gleich oder verschieden sind und jedes Si-Atom im Siloxan eine Funktionalität aus der Reihe Alkyl, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy trägt und die verbleibenden freien Valenzen der Si-Atome im Siloxan durch Methoxy- oder Ethoxy- oder Hydroxy-Gruppen gesättigt sind,
in situ in einem flüssigen, härtbaren Kunstharz oder einer Vorläuferstufe eines Kunstharzes umsetzt, der Gehalt an Oxidpartikel der Komponente (i) 10 bis 300 Gew.-Teile, bezogen auf 100 Gew.-Teile der eingesetzten Kunstharzkomponente, beträgt und man die Umsetzung in einem Knet- oder Dispergieraggregat durchführt.

3. Verfahren nach Anspruch 2,
**dadurch gekennzeichnet,**
**dass** man als härtbares Kunstharz oder Vorläuferstufe eines härtbaren Kunstharzes ein Acrylat, Methacrylat, Epoxid, Epoxidharz, Polyurethan, Polyurethanharz, ungesättigte Polyester, ungesättigtes Polyesterharz, Epoxyacrylat, Polyesteracrylat, Urethanacrylat, Siliconacrylate oder Gemische aus zwei oder mehreren der zuvor genannten Komponenten einsetzt.

4. Verfahren nach Anspruch 2 oder 3,
**dadurch gekennzeichnet,**
**dass** man > 80 bis 200 Gew.-Teile der oxidischen Komponente (i), bezogen auf 100 Gew.-Teile des eingesetzten Kunstharzes, einsetzt.

5. Verfahren nach einem der Ansprüche 2 bis 4,
**dadurch gekennzeichnet,**
**dass** man die oxidische Komponenten (i) und mindestens eine silanbasierende Komponente (ii), (iii) und/oder (iv) in einem Gewichtsverhältnis von 100 : 1 bis 0,5 : 1 einsetzt.

6. Verfahren nach einem der Ansprüche 2 bis 5,
**dadurch gekennzeichnet,**
**dass** man als Komponente (a) mindestens ein nanoskaliges Oxid und/oder Mischoxid aus der Reihe der Elemente Si, Al, Ti und/oder Zr einsetzt und die Partikel eine mittleren Korngröße von 1 bis 200 nm aufweisen.

7. Verfahren einem der Ansprüche 2 bis 6,
**dadurch gekennzeichnet,**
**dass** man als Komponente (a) eine nanoskalige Kieselsäure einsetzt.

8. Verfahren einem der Ansprüche 2 bis 7,
**dadurch gekennzeichnet,**
**dass** man als Komponente (b) einen mikroskaliger Korund mit einer mittleren Korngröße von 3 bis 40 µm einsetzt.

9. Verfahren einem der Ansprüche 2 bis 8,
**dadurch gekennzeichnet,**
**dass** man als Komponente (c) ein Oxidpartikelgemisch bestehend aus einer nanoskaligen Kieselsäure (a) und einem mikroskaligen Korund (b) einsetzt.

10. Verfahren nach einem der Ansprüche 2 bis 9,
**dadurch gekennzeichnet,**
**dass** man als Komponente (ii) 3-Methacryloxypropyltrimethoxysilan, 3-Methacryloxypropyltriethoxysilan, 3-Methacryloxypropylmethyldimethoxysilan, 3-Methacryloxypropylmethyldiethoxysilan, 3-Methacryloxy-2-methyl-propyltrimethoxysilan, 3-Methacryloxy-2-methyl-propyltriethoxysilan, Vinyltrimethoxysilan, Vinyltriethoxysilan, Vinylmethyldimethoxysilan, Vinylmethyldiethoxysilan, Phenyltrimethoxysilan, Phenyltriethoxysilan, n-Propyltrimethoxysilan oder n-Propyltriethoxysilan oder ein Gemisch aus zwei oder mehreren der zuvor genannten Silane einsetzt.

11. Verfahren nach einem der Ansprüche 2 bis 10,
**dadurch gekennzeichnet,**
**dass** man als Komponente (iv) mindestens ein n-Propylmethoxysiloxan, n-Propylethoxysiloxan, Vinylmethoxysiloxan, Vinylethoxysiloxan, Phenyltrimethoxysiloxan, Phenyltriethoxysiloxan, Perfluor-1,1,2,2-tetrahydroalkylethoxysiloxan sowie Perfluor-1,1,2,2-tetrahydroalkylmethoxysiloxan, mit jeweils 3 bis 16 C-Atomen in den Alkylgruppen, 3-Methacryloxypropylmethoxysiloxan, 3-Methacryloxypropylethoxysiloxan, n-Propyl/Vinylmethoxysiloxan, n-Propyl/-Vinylethoxysiloxan, Phenyl/Vinylethoxysiloxan, Phenyl/Vinylmethoxysiloxan, 3-Methacryloxypropyl/n-Propylmethoxysiloxan, 3-Methacryloxypropyl/n-Propylethoxysiloxan, 3-Methacryloxypropyl/Phenylmethoxysiloxan, 3-Methacryloxypropyl/Phenylethoxysiloxan, 3-Methacryloxypropyl/Tridecafluor-1,1,2,2-tetrahydrooctylmethoxysiloxan, 3-Methacryloxypropyl/Tridecafluor-1,1,2,2-tetrahydrooctylethoxysiloxan, Vinyl/Tridecafluor-1,1,2,2-tetrahydrooctylmethoxysiloxan, Vinyl/Tridecafluor-1,1,2,2-tetrahydrooctylethoxysiloxan oder eine Mischung daraus einsetzt.

12. Verfahren nach einem der Ansprüche 2 bis 11,
**dadurch gekennzeichnet,**
**dass** man die Umsetzung in Gegenwart eines Katalysators durchführt.

13. Verfahren nach einem der Ansprüche 2 bis 12,
**dadurch gekennzeichnet,**
**dass** man die Umsetzung in Gegenwart eines Netzmittels durchführt.

14. Verfahren nach einem der Ansprüche 2 bis 13,
**dadurch gekennzeichnet,**
**dass** man die Umsetzung in Gegenwart von Wasser durchführt.

15. Verfahren nach einem der Ansprüche 2 bis 14,
**dadurch gekennzeichnet,**
**dass** man pro Mol Si der siliciumorganischen Komponente (ii) 0,5 bis 6 Mol Wasser einsetzt.

16. Verfahren nach einem der Ansprüche 2 bis 15,
**dadurch gekennzeichnet,**
**dass** man die Umsetzung bei einer Temperatur im Bereich von 30 bis 100 °C durchführt.

17. Verfahren nach einem der Ansprüche 2 bis 16,
**dadurch gekennzeichnet,**
**dass** man
- das härtbare Kunstharz oder eine Vorläuferstufe eines härtbaren Kunstharzes in einem Knet- oder Dispergieraggregat vorlegt und erwärmt,
- Katalysator, gegebenenfalls Netzmittel und Wasser zugibt,
- Komponenten (ii) bis (iv) einbringt und anschließend
- Oxidpartikel (i) unter guter Durchmischung zusetzt.

18. Verfahren nach Anspruch 17,
**dadurch gekennzeichnet,**
**dass** man das härtbare Kunstharz oder eine Vorläuferverbindung eines härtbaren Kunstharzes auf eine Temperatur im Bereich von 50 bis 90 °C erwärmt.

19. Verfahren nach Anspruch 16 oder 17,
**dadurch gekennzeichnet,**
**dass** man das härtbare Kunstharz oder eine Vorläuferverbindung eines härtbaren Kunstharzes auf eine Temperatur im Bereich von 65 bis 75 °C erwärmt.

20. Verfahren nach einem der Ansprüche 2 bis 19,
**dadurch gekennzeichnet,**
**dass** man während der Umsetzung und/oder danach den entstandenen Alkohol aus dem Reaktionssystem entfernt.

21. Verwendung einer pastösen siliciumorganische Nano- und/oder Mikrohybridkapseln enthaltenden Zusammensetzung nach Anspruch 1 oder einer entsprechenden Zusammensetzung, die nach einem der Ansprüche 2 bis 20 hergestellt wird, für die Herstellung eines Lacks zur Erzeugung kratzund/oder abriebfester Beschichtungen.

22. Verwendung nach Anspruch 21, wobei man zur Herstellung des Lacks die pastöse siliciumorganische Nano- und/oder Mikrohybridkapseln enthaltende Zusammensetzung mit einem flüssigen Kunstharz, einer Vorläuferverbindung eines Kunstharzes und/oder einem Lösemittel verdünnt.
